# EUROPEAN PATENT APPLICATION

(11) **EP 4 769 731 A1**
(43) Date of publication of application: **01.07.2026**
(21) Application number: 25227127.5
(22) Date of filing: 23.12.2025
(51) Int. Cl.: H01M 50/249, H01M 50/342, H01M 50/358, H01M 50/40, H01M 50/204

(54) **HOUSING AND ELECTRICAL ENERGY STORAGE DEVICE**

(30) Priority: 31.12.2024 CN 202423319608 U
(71) Applicant: ZHEJIANG COSMX POWER CO., LTD., Jiaxing Zhejiang 314300 (CN)
(72) Inventor: MO,, Xibao, Jiaxing, 314300 (CN); LI, Jie, Jiaxing, 314300 (CN); ZHAO, Wenbin, Jiaxing, 314300 (CN); WANG, Liming, Jiaxing, 314300 (CN); GUO, Fuchun, Jiaxing, 314300 (CN); HUANG, Tao, Jiaxing, 314300 (CN)
(74) Representative: Murgitroyd & Company

(57) **Abstract**

The present invention discloses a housing including: a housing portion in which an accommodating cavity is formed, an outer wall surface of the housing portion being provided with an exhaust port communicating with the accommodating cavity; a first tube portion in which an exhaust passage is formed, one end of the exhaust passage communicating with the exhaust port at one end, and the other end of the exhaust passage communicating with an outer space; a diaphragm covering the exhaust port; and a plurality of baffle plates arranged at intervals in the exhaust passage in a length direction of the exhaust passage; where on a projective plane perpendicular to the length direction of the exhaust passage, orthographic projections of the plurality of baffle plates cover an orthographic projection of the exhaust port, and the orthographic projection of each of the baffle plates covers a portion of the exhaust port.

## Description

### TECHNICAL FIELD

The present invention relates to the technical field of cells, and in particular, to a housing and an electrical energy storage device.

### BACKGROUND

During a cycling process, cells will generate gas. In order to ensure the safety of an electrical energy storage device during use, an exhaust port is provided on a housing of the electrical energy storage device to discharge the gas from the electrical energy storage device timely, thereby preventing accidents caused by volume expansion of the gas. However, the exhaust port communicates with the outside, which often allows moisture from external environment to enter the interior of the electrical energy storage device.

Especially, secondary batteries used in new energy vehicles, which are mounted on a vehicle chassis, they will frequently encounter situations where dirty water from a road surface rushes into their housings, thereby causing potential safety hazards.

### SUMMARY

In order to solve the above problems, an object of the present invention is to provide a housing and an electrical energy storage device.

In a first aspect, the present invention provides a housing, including:
a housing portion in which an accommodating cavity is formed, an outer wall surface of the housing portion being provided with an exhaust port communicating with the accommodating cavity;
a first tube portion in which an exhaust passage is formed, one end of the exhaust passage communicating with the exhaust port at one end, and the other end of the exhaust passage communicating with an outer space;
a diaphragm covering the exhaust port; and
a plurality of baffle plates arranged at intervals in the exhaust passage in a length direction of the exhaust passage; where on a projective plane perpendicular to the length direction of the exhaust passage, orthographic projections of the plurality of baffle plates cover an orthographic projection of the exhaust port, and the orthographic projection of each of the baffle plates covers a portion of the exhaust port.

As an implementation of the present invention, the orthographic projections of any two of the baffle plates on a plane in which the exhaust port is located have no overlap with each other.

As an implementation of the present invention, the baffle plate close to the exhaust port is provided with a puncturing portion on a side facing the exhaust port.

As an implementation of the present invention, the plurality of baffle plates include a first plate and a second plate each having a semicircular shape, the first plate is located at an end of the exhaust passage away from the exhaust port, and the puncturing portion is disposed on the second plate.

As an implementation of the present invention, the first plate is located above the second plate in a direction of gravity.

As an implementation of the present invention, the plurality of baffle plates include a third plate and a fourth plate, the third plate including two first sectors disposed diagonally, and the fourth plate comprising two second sectors disposed diagonally.

As an implementation of the present invention, the third plate is located at an end of the exhaust passage away from the exhaust port, and an area of the third plate is greater than an area of the fourth plate.

As an implementation of the present invention, the puncturing portion includes a sharp end and a non-sharp end, the puncturing portion is fixed to the baffle plate close to the exhaust port via the non-sharp end, and the sharp end faces toward the diaphragm.

As an implementation of the present invention, the sharp end is aligned with a center of the diaphragm.

As an implementation of the present invention, the puncturing portion is integrally formed with the baffle plate close to the exhaust port.

As an implementation of the present invention, the housing further includes a second tube portion connected to the outer wall surface of the housing portion, the second tube portion being sleeved on the first tube portion, a gap A being formed between an outer side wall of the first tube portion and an inner side wall of the second tube portion, and the gap A satisfying: 5 mm ≥ A ≥ 1.2 mm.

As an implementation of the present invention, a plurality of water retaining strips are provided on an inner wall of the second tube portion, and the plurality of water retaining strips are arranged uniformly around the second tube portion; and the plurality of water retaining strips are located on sides of the plurality of baffle plates away from the exhaust port.

As an implementation of the present invention, a sum of areas of the plurality of baffle plates is greater than or equal to an area of the exhaust port.

As an implementation of the present invention, the sum of the areas of the plurality of baffle plates is equal to the area of the exhaust port.

In a second aspect, the present invention further provides an electrical energy storage device, which includes a plurality of cells and a housing as described above, the plurality of cells being accommodated inside the housing.

The beneficial effects of the present invention lie in that: the plurality of baffle plates smaller than the exhaust port are disposed in the exhaust tube, the projections of the plurality of baffle plates in the exhaust passage cover the exhaust port, and the plurality of baffle plates are located at different positions in the exhaust passage, such that the exhaust port is allowed to communicate with the outer space to ensure normal flow of gas at the exhaust port, and the plurality of baffle plates collectively work together to block moisture or impurities from rushing into the accommodating cavity from outside, further ensuring the use safety of the electrical energy storage device.

### BRIEF DESCRIPTION OF THE DRAWINGS

In order to illustrate the technical solutions in the embodiments of the present invention or in the prior art more clearly, the accompanying drawings required for describing the embodiments or the prior art will be briefly introduced below. Obviously, the drawings in the following description merely show some of the embodiments of the present invention, and those with ordinary skill in the art would have obtained other drawings from these drawings without involving any inventive effort.
FIG. 1 is a schematic structural diagram of a housing according to an embodiment of the present invention.
FIG. 2 is a transverse sectional view of FIG. 1.
FIG. 3 is a longitudinal sectional view of FIG. 1.
FIG. 4 is a front view of FIG. 1.
FIG. 5 is a sectional view taken along a line C-C of FIG. 4.
FIG. 6 is a left view of FIG. 1.
FIG. 7 is an enlarged view of an example baffle plate of the present invention.
FIG. 8 is an enlarged view of another example baffle plate of the present invention.

Reference signs:
10. Housing portion; 20. Tube portion; 21. First tube portion; 211. Baffle plate; 2111. Puncturing portion; 22. Second tube portion; 221. Water retaining strip.

### DETAILED DESCRIPTION OF THE EMBODIMENTS

It is known that during cycles of cells, chemical reactions between active materials and an electrolyte produce gas, thereby causing an internal pressure of an electrical energy storage device to rise. In order to ensure the safety in the cycles of the cells, in the related art, an exhaust port is disposed on a housing of the electrical energy storage device to discharge the gas produced during the cycles of the cells timely, thereby avoiding hazards such as explosion due to excessive gas pressure in the electrical energy storage device.

However, although the exhaust port can discharge the gas from the cells timely to maintain the internal gas pressure of the cells within a safe range, moisture from external environment enters the interior of the electrical energy storage device through the exhaust port. When the moisture accumulates to a certain amount within the electrical energy storage device, there is a risk of internal short-circuiting of the electrical energy storage device.

As an attempt to solve the above-mentioned problem, in the related art, a waterproof and breathable film is disposed over the exhaust port, such that the gas produced during the cycles of the cells is discharged timely, the internal gas pressure of the housing is maintained within the safe range, and the moisture is blocked from entering the interior of the electrical energy storage device from the outside. The inventors have found that in some usage scenarios, the waterproof and breathable film works effectively. However, in some usage scenarios, the waterproof and breathable film fails to achieve some of desired effects. For example, when used in a new energy vehicle, the electrical energy storage device is usually mounted on a chassis of the vehicle. When the vehicle drives on a road with dirty water, a large amount of dirty water will rush into an exhaust passage. The waterproof and breathable film may rupture under a large impact force, resulting in dirty water entering the electrical energy storage device through the exhaust port, and affecting the normal use of the electrical energy storage device.

In order to solve the above-mentioned problem of the related art, the present invention provides a housing and an electrical energy storage device having the above housing. The technical solutions in the embodiments of the present invention will be clearly and completely described below with reference to the accompanying drawings in the embodiments of the present invention. Apparently, the embodiments described are some of, rather than all of, the embodiments of the present invention. All other embodiments obtained by those with ordinary skill in the art based on the embodiments of the present invention without creative efforts shall fall within the scope of protection of the present invention.

It should be noted that all directional indications (such as upper, lower, left, right, front, rear ...) involved in the embodiments of the present invention are only used for explaining the relative positional relationship and movement between components in a certain pose (as shown in the figures), and when the specific pose changes, the directional indications also change accordingly.

In addition, in the description of the present invention, the terms are used merely for illustrative purposes and are not intended to limit the scope of the present invention. The terms "comprise" and/or "include" are used to specify the presence of the elements, steps, operations and/or components, but do not exclude the presence or addition of one or more other elements, steps, operations and/or components. The terms "first", "second", etc. may be used to describe various elements, without implying any specific order and shall not be construed as limiting these elements. In addition, in the description of the present invention, unless otherwise stated, "a plurality of' means two or more. These terms are used only to distinguish one element from another element. These and/or other aspects will become apparent in conjunction with the following figures, and the description of the embodiments described in relation to the present invention will be more readily understood by those skilled in the art. The accompanying drawings are merely for illustrative purposes to depict the embodiments in the present invention. Those skilled in the art will readily recognize from the following description that alternative embodiments of the structures and methods shown in the present invention may be employed without departing from the principles described in the present invention.

An embodiment of the present invention provides a housing, including a housing portion 10, a tube portion 20, a diaphragm, and a plurality of baffle plates 211.

The housing portion 10 is provided with an accommodating cavity and an exhaust port. The tube portion 20 includes a first tube portion 21 and a second tube portion 22, and the second tube portion 22 is sleeved on the first tube portion 21. The first tube portion 21 is provided with an exhaust passage, and a diaphragm covers the exhaust port to separating the accommodating cavity from the exhaust passage. The plurality of baffle plates 211 are arranged at intervals in the exhaust passage in a length direction of the exhaust passage. On a projective plane perpendicular to the length direction of the exhaust passage, orthographic projections of the plurality of baffle plates 211 cover an orthographic projection of the exhaust port, and the orthographic projection of each of the baffle plates 211 covers a portion of the exhaust port.

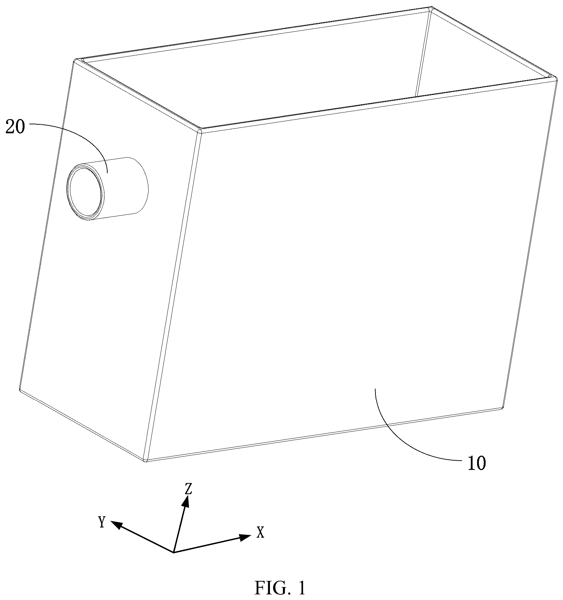

Referring to FIG. 1 to FIG. 3, an example of the housing of the electrical energy storage device is described. It is known that the housing of the electrical energy storage device includes an upper housing and a lower housing connected hermetically. The housing portion 10 may be, for example, the lower housing of the electrical energy storage device. A cell assembly of the electrical energy storage device is disposed in an accommodating cavity formed by the lower housing. An exhaust port is provided on a side surface of the lower housing. The exhaust port may be disposed on, for example, any of front, rear, left and right side surfaces of the lower housing. Preferably, the exhaust port may be disposed on a side surface of the lower housing opposite tabs of the cell assembly. Gas within the electrical energy storage device is discharged while heat generated by the cell assembly is dissipated timely through the exhaust port. The tube portion 20 is, for example, a cylindrical tube formed integrally with the lower housing and located on an outer side of the lower housing. The first tube portion 21 is, for example, an inner tube formed integrally with the lower housing, and the second tube portion 22 is, for example, an outer tube formed integrally with the lower housing, and the outer tube is sleeved on the inner tube.

It may be understood that one end of the inner tube is connected to the accommodating cavity formed by the lower housing through the exhaust port, and the other end of the inner tube extends outside the lower housing, such that a space defined by the inner tube forms an exhaust passage. The diaphragm covers the exhaust port, separating the accommodating cavity of the lower housing from the exhaust passage. The diaphragm, for example, is a waterproof and breathable film such as polytetrafluoroethylene. The gas and heat generated during cycles of cells passes through the diaphragm over the exhaust port, and is directed by the exhaust passage to the outside of the housing, such that the internal pressure and heat of the electrical energy storage device is maintained within a safe range.

With continued reference to FIG. 1 to FIG.3, in the exhaust passage formed by the inner tube, the plurality of baffle plates 211 are arranged at intervals in the length direction of the exhaust passage, the orthographic projections of the plurality of baffle plates 211 on the projective plane perpendicular to the length direction cover the exhaust port, and the orthographic projection of each of the baffle plates 211 covers only a portion of the exhaust port.

That is, an area of each baffle plate 211 of the plurality of baffle plates 211 is smaller than an area of the exhaust port, and the sum of the areas of the plurality of baffle plates 211 is greater than or equal to the area of the exhaust port.

Preferably, the sum of the areas of the plurality of baffle plates 211 may be slightly greater than the area of the exhaust port. More preferably, the sum of the areas of the plurality of baffle plates 211 is equal to the area of the exhaust port. In this way, the plurality of baffle plates 211 in the exhaust passage effectively blocks water or moisture rushing into the inner tube from the outside, preventing the diaphragm from being damaged by a large impact force. Moreover, since the area of each of the baffle plates 211 is smaller than the area of the exhaust port and there is a gap between any two adjacent baffle plates 211, the discharge of the gas or heat from the housing through the exhaust passage will not be affected.

For example, the plurality of baffle plates 211 are arranged at different positions in the length direction of the exhaust passage, and the plurality of baffle plates 211 are misaligned in a circumferential direction of the exhaust passage. Thus, it is possible to ensure that the sum of the areas of the plurality of baffle plates 211 is sufficient to cover the exhaust port, that is, the plurality of baffle plates 211 effectively block water or moisture from rushing into the exhaust passage, and the diaphragm will not rupture by the large impact force from the moisture. In addition, it is possible to ensure that there is a gap between the plurality of baffle plates 211 for the passage of the gas. Therefore, the limitations in use of the waterproof and breathable film in specific usage scenarios are overcome effectively.

It should be noted that the two ends of the exhaust passage, i.e. two openings of the inner tube, also belong to the interior of the exhaust passage. That is, the baffle plates 211 may also be disposed at the ends of the exhaust passage, for example, the baffle plates 211 may be disposed at an end of the exhaust passage away from the housing portion 10.

Optionally, the number of the baffle plates 211 may be 2, 3, 4, or 5, etc., which may be determined depending on factors such as the length and diameter of the exhaust passage. The present invention does not impose specific limitations on the number of the baffle plates 211. In addition, the tube portion 20 and the housing portion 10 may be of a split structure, and the tube portion 20 and the housing portion 10 may be connected by a suitable connector, which is not specifically limited in the present invention.

In an optional embodiment, the baffle plate 211 close to the exhaust port is provided with a puncturing portion 2111 on a side facing the exhaust port.

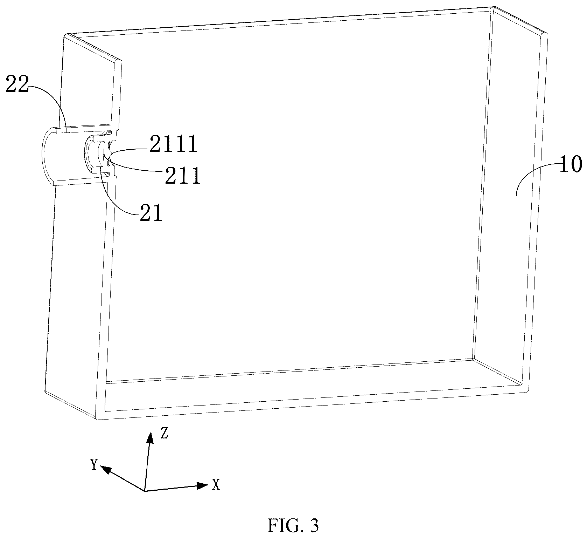

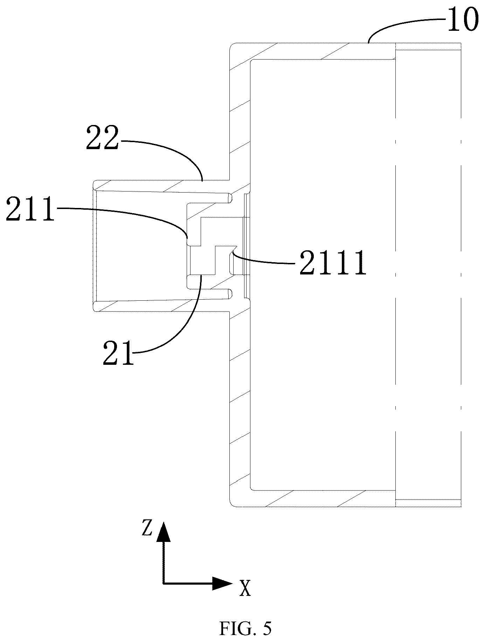

Referring to FIG. 3 to FIG. 5, an example of a housing of a cell is described. The puncturing portion 2111 is disposed on the baffle plate 211 close to the exhaust port. The puncturing portion 2111 is located on a surface of the side of the baffle plate 211 facing the exhaust port. Thus, when the cells in the accommodating cavity have problems such as overheating and gas generation, the internal gas pressure of the housing increases sharply. The diaphragm expands by the high internal gas pressure of the housing and comes into contact with the puncturing portion 2111, and the puncturing portion 2111 punctures the diaphragm as the diaphragm further expands, such that the internal pressure of the housing decreases rapidly, avoiding the incident of thermal runaway. Moreover, the puncturing portion 2111 is disposed on the baffle plate 211, it is possible to reduce the mass and size of the housing to a certain extent without the use of an additional fixing structure for the puncturing portion 2111, thereby contributing to an increase in energy density.

Specifically, the puncturing portion 2111 may be, for example, a needle-like sharp structure to enable it to puncture the expanded diaphragm in time effectively. It is readily understood that the puncturing portion 2111 includes a sharp end and a non-sharp end. The puncturing portion 2111 is fixed to the baffle plate 211 close to the exhaust port at the non-sharp end, with the sharp end directed toward the diaphragm. Preferably, the sharp end or needle tip of the puncturing portion 2111 is aligned with a center of the diaphragm such that when the diaphragm expands, the puncturing portion 2111 punctures the diaphragm at the position having a maximum deformation. It is easier to puncture the diaphragm to quickly reduce the internal gas pressure of the housing.

Optionally, the puncturing portion 2111 may be formed integrally with the baffle plate 211 close to the exhaust port to improve the stability between the puncturing portion 2111 and the baffle plate 211. The puncturing portion 2111 and the baffle plate 211 close to the exhaust port may also be of a split structure, and the puncturing portion 2111 is fixed onto the baffle plate 211 by a suitable fixing means. During use, the method to fix the puncturing portion 2111 and the baffle plate 211 is determined by taking into account factors such as the material and size of the baffle plate 211, which is not specifically limited in the present invention.

In an optional embodiment, the orthographic projections of any two of the baffle plates 211 on a plane where the exhaust port is located has no overlap with each other, that is, the sum of areas of the plurality of baffle plates 211 is equal to the area of the exhaust port, and, the baffle plates 211 are misaligned in the circumferential direction of the exhaust passage, that is, any two of the baffle plates 211 have no overlap with each other in the circumferential direction of the exhaust passage. Therefore, the moisture is effectively blocked from rushing into the exhaust passage from the outside; in addition, there is no additional increase in the resistance to the discharge of gas from the housing due to the overlap between the baffle plates 211; and the mass of the housing will also be reduced to some extent.

Preferably, the plurality of baffle plates 211 include a first plate and a second plate each having a semicircular shape. The first plate is located at an end of the exhaust passage away from the exhaust port, and the first plate is located above the second plate in a direction of gravity.

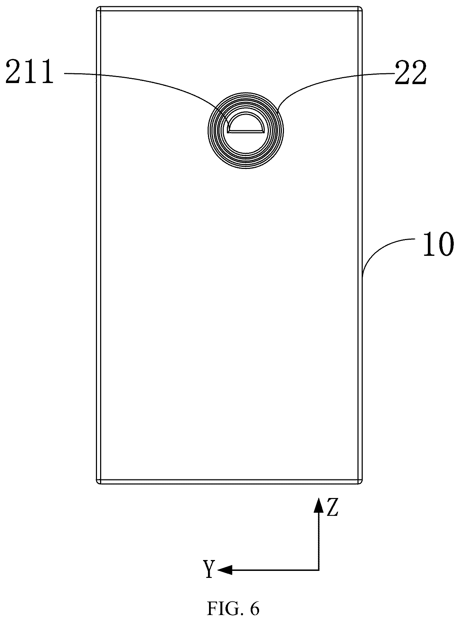

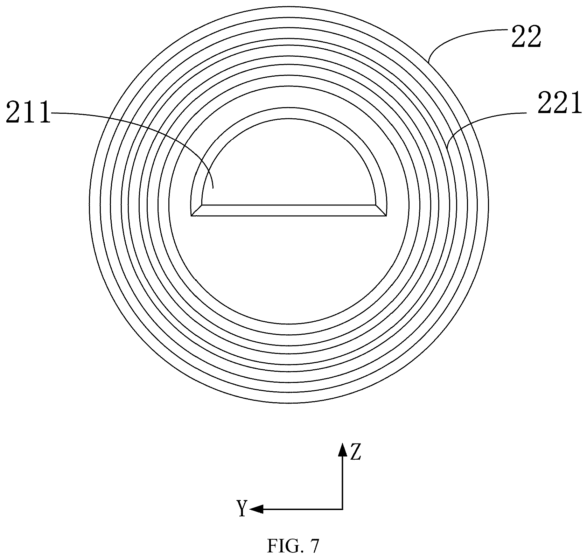

As shown in Figs. 6-7, the first plate and the second plate each having a semicircular shape are arranged at intervals in the exhaust passage in the length direction of the exhaust passage. The end of the exhaust passage close to the exhaust port is, for example, its gas inlet, and the end of the exhaust passage away from the exhaust port is, for example, its gas outlet. Here, the first plate is disposed at, for example, at the gas outlet of the exhaust passage, such that the first plate immediately blocks the moisture inrush from the outside, minimizing the moisture entering the exhaust passage. Moreover, a position of the first plate is higher than a position of the second plate in the direction of gravity. That is, the first plate and the second plate that are semicircular are connected to an inner wall of the first tube portion 21 on their arc sides, and diameters of the first plate and the second plate are parallel to a horizontal plane in the exhaust passage. Thus, even if part of the moisture "escapes" from the first plate into the exhaust passage, it is blocked by the second plate, such that the moisture is always retained on a side of the second plate away from the exhaust port, and then is driven to flow under the action of an external force. The first plate being disposed above the second plate will not block the flow of the part of the moisture, and eventually the part of the moisture will gradually flow out of the exhaust passage, thereby avoiding the accumulation of moisture in the exhaust passage.

Here, the second plate is, for example, positioned close to the gas inlet of the exhaust passage. The puncturing portion 2111 is disposed on a side of the second plate facing the exhaust port. It may be understood that a certain gap needs to be maintained between the second plate and the exhaust port, and the gap provides a space for expansion of the diaphragm. For example, when the diaphragm expands within the safe range of gas pressure, the puncturing portion 2111 does not come into contact with the diaphragm; alternatively, even if the puncturing portion 2111 comes into contact with the diaphragm, it will not puncture the diaphragm, thus avoiding failure of the diaphragm. The size of this gap is comprehensively determined depending on factors such as the safe pressure value of the housing and the deformation property of the diaphragm itself, as long as it is ensured that the diaphragm is punctured timely in the event of thermal runaway within the housing, and the present invention does not impose specific limitations thereto.

Alternatively, the plurality of baffle plates 211 include a third plate and a fourth plate. The third plate includes two first sectors disposed diagonally, and the fourth plate includes two second sectors disposed diagonally. Moreover, the third plate is located at the end of the exhaust passage away from the exhaust port, and an area of the third plate is greater than an area of the fourth plate.

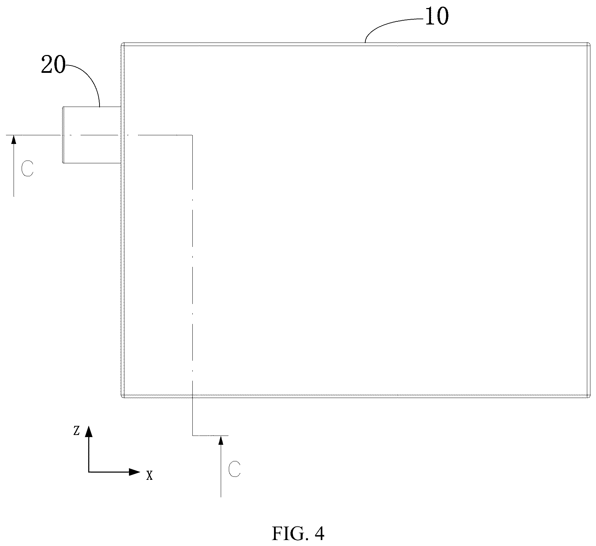

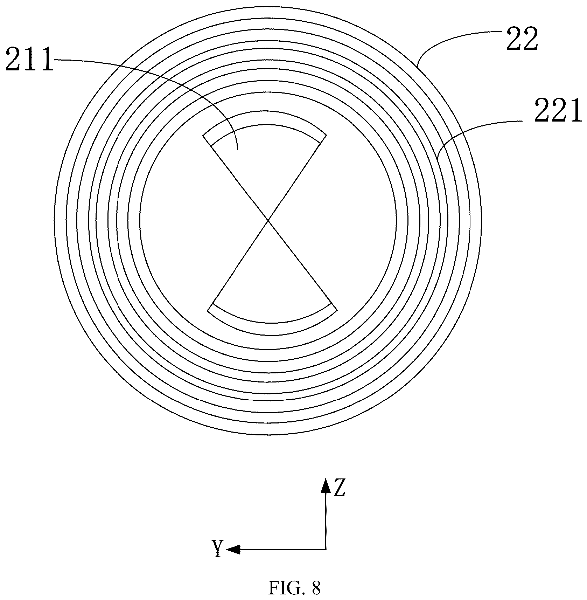

As shown in FIG. 8, the third plate and the fourth plate are arranged at intervals in the length direction of the exhaust passage. Unlike the embodiment shown in FIG. 4, the third plate and the fourth plate each include two sectors disposed diagonally. Specifically, the third plate includes a sector I and a sector II, both of which are connected to the inner wall of the first tube portion 21 at their arc sides, and vertices of the sector I and the sector II coincide with each other. The fourth plate includes a sector III and a sector IV, both of which are connected to the inner wall of the first tube portion 21 at their arc sides, and vertices of the sector III and the sector IV coincides with each other. Preferably, the sector I and the sector II are of an integrated structure, and the sector III and the sector IV are of an integrated structure, such that the overall strength and stability of the third plate and the fourth plate is improved.

The end of the exhaust passage close to the exhaust port is, for example, its gas inlet, and the end of the exhaust passage away from the exhaust port is, for example, its gas outlet. The third plate is located at the gas outlet of the exhaust passage, and the moisture inrush from the outside is immediately blocked by the third plate. Preferably, the area of the third plate may be greater than the area of the fourth plate, i.e. the sum of areas of the sector I and the sector II is greater than the sum of areas of the sector III and the sector IV. Thus, the third plate blocks as much moisture from the outside as possible, preventing the moisture from rushing into the exhaust passage. Optionally, the areas of the sector I and the sector II of the third plate may be the same or different, and may be selected in use according to circumstances, which are not specifically limited in the present invention.

The fourth plate is located close to the gas inlet of the exhaust passage, and the puncturing portion 2111 is disposed on a surface of a side of the fourth plate facing the exhaust port. It is easy to understand that a certain gap is formed between the fourth plate and the diaphragm to provide a certain deformation space for the expansion of the diaphragm. For example, when the diaphragm expands within the safe range of gas pressure, the puncturing portion 2111 does not come into contact with the diaphragm; alternatively, even if the puncturing portion 2111 comes into contact with the diaphragm, it will not puncture the diaphragm, thus avoiding failure of the diaphragm. The size of this gap is comprehensively determined depending on factors such as the safe pressure value of the housing and the deformation property of the diaphragm itself, as long as it is ensured that the diaphragm is punctured timely in the event of thermal runaway within the housing, and the present invention does not impose specific limitations thereto.

Preferably, the sector III and the sector IV of the fourth plate have the same areas, that is, the sector III and the sector IV are in central symmetry in the exhaust passage. An end of the puncturing portion 2111 away from the diaphragm is connected to the fourth plate, and an end of the puncturing portion 2111 close to the diaphragm (the sharp end of the puncturing portion 2111) is exactly opposite the center of the diaphragm, such that the diaphragm is punctured at the position having the maximum deformation while a uniform stress on the puncturing portion 2111 is ensured. The tilting of the puncturing portion 2111 due to an uneven stress is avoided, and the circumstance where the puncturing portion 2111 fails to puncture the diaphragm effectively in time is avoided.

In an optional embodiment, the housing further includes a second tube portion 22 connected to the housing portion 10. The second tube portion 22 sleeved on the first tube portion 21, a gap A is provided between an outer side wall of the first tube portion 21 and an inner side wall of the second tube portion 22, and the gap A satisfies: 5 mm ≥ A ≥ 1.2 mm.

Referring to FIG. 1, the first tube portion 21 is sleeved with the second tube portion 22. As mentioned above, the space defined by the first tube portion 21 forms the exhaust passage, and gas and heat within the housing is discharged to the outside under the guidance of the exhaust passage. However, due to the limitations imposed by factors such as application scenarios, housing installation space, or manufacturing processes, it is often necessary to limit the length and diameter of the first tube portion 21. By means of a second sleeve disposed around the first tube portion 21, a flexible tube for directing gas discharge is sleeved on the second tube portion 22. This not only overcomes the limitations in the manufacturing process but also increases the gas discharge velocity, facilitating rapid discharge of gas from the housing.

Furthermore, due to surface tension of a liquid, the gap A being configured to be less than 1.2 mm is not conducive to the flow of the liquid retained within the gap A. If the gap A is greater than 5 mm, it causes significant accumulation of the moisture in the gap A, which affects the electrical safety. Therefore, the gap A is set within this range, which ensures both the rapid flow and volatilization of the moisture and the safety of the electrical energy storage device.

For example, in the case of a start-stop battery pack, a flexible hose is connected to the second tube portion 22. The flexible hose may extend all the way to the underside of the vehicle chassis, thereby directing the gas or heat from the housing to the external environment. In addition, the radial dimension of the exhaust passage formed by the flexible hose is greater than the dimension of the exhaust passage formed by the first tube portion 21, such that the velocity of discharging the gas from the housing is also increased to a certain extent.

Optionally, for example, the first tube portion 21 and the housing portion 10 are connected in the same way, the second tube portion 22 and the housing portion 10 may be formed integrally, or the second tube portion 22 and the housing portion 10 may be of a split structure and are then connected by a specific connector. The present invention is described by way of example in which the second tube portion 22 and the housing portion 10 are formed integrally. The first tube portion 21, the second tube portion 22 and the housing portion 10 are, for example, injection-molded integrally, and the material of the three is, for example, a mixture of nylon and glass fiber.

As shown in FIG. 1, there is the gap A between the outer side wall of the first tube portion 21 and the inner side wall of the second tube portion 22. The gap A is, for example, equal to a distance between the outer side wall of the first tube portion and the inner side wall of the second tube portion in a radial direction of the exhaust passage. the gap A ranges, for example, from 1.2 mm to 5 mm. When the gap A is greater than or equal to 1.2 mm, a buffer space may be formed between the first tube portion 21 and the second tube portion 22 to serve the function of blocking moisture inrush from the outside. Moreover, in case of the gap A being less than or equal to 5 mm, it is possible to make the radial dimension of the first tube portion 21 relatively small and make the radial dimension of the second tube portion 22 relatively large with the buffer space maintained between the first tube portion 21 and the second tube portion 22, such that the moisture inrush is avoided effectively in the first tube portion 21 and the gas or heat is discharged rapidly from the housing portion 10 through the second tube portion 22.

Preferably, the gap A is in the value range of 1.5-4.5 mm, 1.8-3.6 mm, 2.0-3.5 mm, 2.2-3.0 mm or 2.5-2.8 mm. In addition to having the above-mentioned effect, the gap A satisfying the above-mentioned range may ensure that wall thicknesses of the first tube portion 21 and the second tube portion 22 are made sufficiently small while the first tube portion and the second tube portion satisfy the strength requirements during injection molding. On the other hand, the radial dimension of the first tube portion 21 will not be excessively small, which affects the discharge of gas from the housing portion 10, and the radial dimension of the second tube portion 22 will not be excessively large, which cause excessive dimension of the external flexible hose.

Optionally, the gap A between the outer side wall of the first tube portion 21 and the inner side wall of the second tube portion 22 may be 1.6 mm, 2.1 mm, 2.6 mm, 3.1 mm, 3.2 mm, 3.8 mm, 4.0 mm or 4.2 mm, etc. The value of A is determined in use depending the size adaptability of the housing portion 10, which is not specifically limited in the present invention.

In an optional embodiment, a plurality of water retaining strips 221 are provided on an inner wall of the second tube portion 22, and the plurality of water retaining strips 221 are arranged uniformly around the second tube portion 22; and the plurality of water retaining strips 221 are located on the sides of the plurality of baffle plates 211 away from the exhaust port.

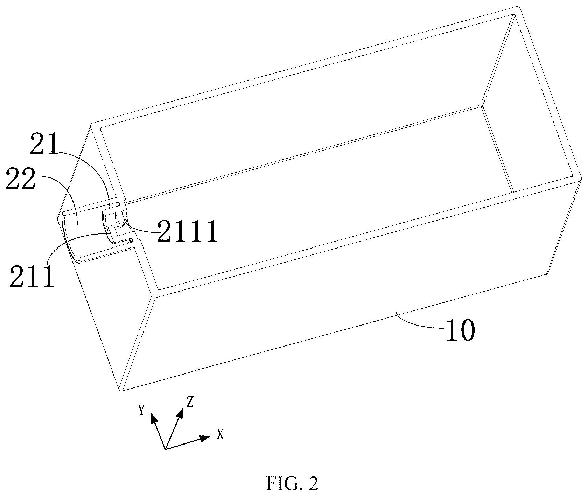

Referring to Figs. 2-3 and 7 or 8, the length of the second tube portion 22 is greater than the length of the first tube portion 21, that is, the second tube portion 22 extends further from the outer side of the housing than the first tube portion 21. When the external moisture enters, it first comes into contact with the second tube portion 22. For example, the plurality of water retaining strips 221 are arranged around the inner wall of the part of the second tube portion 22 that extends beyond the first tube portion 21. When a small amount of moisture enters, the plurality of water retaining strips 221 serve the function of blocking the moisture, preventing the moisture from entering the exhaust passage. The water retaining strips 221 are, for example, ridges or ribs projecting from the inner wall of the second tube portion 22. The number of water retaining strips 221 may be, for example, 2, 3 or 4, etc., and is determined depending on factors such as the lengths of the first tube portion 21 and the second tube portion 22 or operating environment of the housing, which is not specifically limited in the present invention.

According to an embodiment, an electrical energy storage device includes a plurality of cells and a housing as described above, where the plurality of cells are accommodated inside the housing, and tabs of the plurality of cells are arranged facing the exhaust port. The electrical energy storage device described herein may be understood as an electrical energy storage device capable of repeated charging and discharging. The electrical energy storage device may include a start-stop battery pack, an energy storage battery pack, a power battery pack, etc. The electrical energy storage device further includes a top cover, and the top cover covers the housing and is hermetically connected to the housing so as to package the plurality of cells in a cavity enclosed by the top cover and the housing.

The term "cell" may be interpreted as referring to the concept of a "secondary battery". The cells described in the present invention may include lithium-ion secondary batteries, sodium-ion secondary batteries, nickel-metal hydride batteries, etc.

Numerous specific details are described in the specification provided herein. However, it should be understood that the embodiments of the present invention may be practiced without these specific details. In some instances, well-known methods, structures, and technologies are not shown in detail, so as not to obscure the understanding of this specification.

In addition, those of ordinary skill in the art will appreciate that although some embodiments described herein include certain features present in other embodiments rather than other features, combinations of features from different embodiments are meant to be within the scope of the present invention and form different embodiments. For example, in the claims, any of the embodiments claimed may be used in any combination.

Those skilled in the art will appreciate that although the present invention have been described with reference to the exemplary embodiments, various modifications may be made and equivalents may be substituted for its elements without departing from the scope of the present invention. In addition, many modifications may be made to adapt particular situations or materials to the teachings of the present invention without departing from the substantive scope of the present invention. Therefore, the present invention is not limited to the specific embodiments disclosed herein, but rather encompasses all embodiments falling within the scope of the appended claims.

## Claims

1. A housing, comprising:
a housing portion (10) in which an accommodating cavity is formed, an outer wall surface of the housing portion (10) being provided with an exhaust port communicating with the accommodating cavity;
a first tube portion (21) in which an exhaust passage is formed, one end of the exhaust passage communicating with the exhaust port, and the other end of the exhaust passage communicating with an outer space;
a diaphragm covering the exhaust port; and
a plurality of baffle plates (211) arranged at intervals in the exhaust passage in a length direction of the exhaust passage; wherein on a projective plane perpendicular to the length direction of the exhaust passage, orthographic projections of the plurality of baffle plates (211) cover an orthographic projection of the exhaust port, and the orthographic projection of each of the baffle plates (211) covers a portion of the exhaust port.

2. The housing according to claim 1, wherein the orthographic projections of any two of the baffle plates (211) on a plane in which the exhaust port is located have no overlap with each other.

3. The housing according to claim 1 or claim 2, wherein the baffle plate (211) close to the exhaust port is provided with a puncturing portion (2111) on a side facing the exhaust port.

4. The housing according to claim 3, wherein the plurality of baffle plates (211) comprise a first plate and a second plate each having a semicircular shape, the first plate is located at an end of the exhaust passage away from the exhaust port, and the puncturing portion (2111) is disposed on the second plate.

5. The housing according to claim 4, wherein the first plate is located above the second plate in a direction of gravity.

6. The housing according to claim 3, wherein the plurality of baffle plates (211) comprise a third plate and a fourth plate, the third plate comprises two first sectors disposed diagonally, and the fourth plate comprises two second sectors disposed diagonally.

7. The housing according to claim 6, wherein the third plate is located at an end of the exhaust passage away from the exhaust port, and an area of the third plate is greater than an area of the fourth plate.

8. The housing according to any one of claims 3 to 7, wherein the puncturing portion (2111) comprises a sharp end and a non-sharp end, the puncturing portion (2111) is fixed to the baffle plate (211) close to the exhaust port via the non-sharp end, and the sharp end faces toward the diaphragm.

9. The housing according to claim 8, wherein the sharp end is aligned with a center of the diaphragm.

10. The housing according to any one of claims 3 to 9, wherein the puncturing portion (2111) is integrally formed with the baffle plate (211) close to the exhaust port.

11. The housing according to any one of claims 1 to 10, further comprising a second tube portion (22) connected to the outer wall surface of the housing portion (10), the second tube portion (22) being sleeved on the first tube portion (21), a gap A being formed between an outer side wall of the first tube portion (21)and an inner side wall of the second tube portion (22), and the gap A satisfying: 5 mm ≥ A ≥ 1.2 mm.

12. The housing according to claim 11, wherein a plurality of water retaining strips (221) are provided on an inner wall of the second tube portion, and the plurality of water retaining strips (221) are arranged uniformly around the second tube portion (22); and the plurality of water retaining strips (221) are located on sides of the plurality of baffle plates (211) away from the exhaust port.

13. The housing according to claim any one of claims 1 to 12, wherein a sum of areas of the plurality of baffle plates (211) is greater than or equal to an area of the exhaust port.

14. The housing according to claim 13, wherein the sum of the areas of the plurality of baffle plates (211) is equal to the area of the exhaust port.

15. An electrical energy storage device, comprising a plurality of cells and the housing according to any one of claims 1 to 14, the plurality of cells being accommodated in the housing.
